# EUROPÄISCHE PATENTSCHRIFT

(11) **EP 3 322 625 B1**
(45) Veröffentlichungstag und Bekanntmachung des Hinweises auf die Patenterteilung: **21.08.2019**
(21) Anmeldenummer: 16750369.7
(22) Anmeldetag: 06.07.2016
(51) Int. Cl.: B60W 30/095, B60W 30/165

(54) **VORAUSSCHAUENDE STEUERUNG EINES KRAFTFAHRZEUGS**
ANTICIPATORY CONTROL SYSTEM OF A MOTOR VEHICLE
COMMANDE PRÉDICTIVE D'UN VÉHICULE AUTOMOBILE

(30) Priorität: 15.07.2015 DE 102015213227
(43) Veröffentlichungstag der Anmeldung: 23.05.2018
(73) Patentinhaber: Conti Temic microelectronic GmbH, 90411 Nürnberg (DE)
(72) Erfinder: FENDT, Günter Anton, 86529 Schrobenhausen (DE)
(86) Internationale Anmeldenummer: PCT/DE2016/200309
(87) Internationale Veröffentlichungsnummer: WO 2017/008800

(56) Entgegenhaltungen:
- DE-A1-102011 103 603
- DE-A1-102013 210 923
- US-A1- 2014 180 569

## Beschreibung

### Gebiet der Erfindung

Die Erfindung betrifft eine Vorrichtung zur Steuerung für ein Egofahrzeug in einer Fahrzeugkolone beim Ausweichen vor einem Hindernis. Bevor das Egofahrzeug einer übernommenen Ausweichtrajektorie eines vorausfahrenden Fahrzeugs folgt, wird eine Gefährdungsbewertung der Fahrstrategie des vorausfahrenden Fahrzeugs durchgeführt und anhand des Ergebnisses der Gefährdungsbewertung die Ausweichtrajektorie modifiziert.

Ferner betrifft die Erfindung ein Verfahren für die Steuerung eines Assistenz- und Sicherheitssystem für ein Fahrzeug, wobei das Fahrzeug auch zum autonomen Fahren ausgebildet ist.

Moderne Fahrzeuge werden in zunehmender Weise mit umgebungserfassenden Fahrerassistenzsystemen ausgestattet. So gehören kamerabasierte Systeme, wie beispielsweise optische Einparkhilfen, 360 Grad-Rundumsicht-Applikationen, Spurhalteassistenten (lane departure warning) (LDW), ACC-Systeme, Abstandswarnsysteme (Radar, Lidar), Pre-Crash-Sensoriken und dergleichen mittlerweile zur Sonderausstattung von Fahrzeugen. Die durch diese Geräte erfassten Informationen über die Umgebung des Fahrzeugs kann für weitere Funktionen genutzt werden.

Die DE 10 2011 103 603 A1 offenbart einen synchroner Überholvorgang, bei dem ein zweites Fahrzeug einem ersten Fahrzeug beim Überholen eines langsam fahrenden Fahrzeugs folgt. Bei eingeschränkter Sicht bremst das zweite Fahrzeug ab, anstatt dem ersten Fahrzeug zu folgen, um eine bessere Sicht nach vorn zu haben und die Gefährdung durch den Gegenverkehr zu beurteilen.

Die DE 10 2013 210 395 A1 zeigt ein Verfahren zur Datenkommunikation, die zwischen einer Vielzahl von Fahrzeugen einerseits und einem fahrzeugexternen zentralen Informationspool andererseits stattfindet, wobei die Fahrzeuge jeweils einen automatischen Fahrmodus aufweisen, in welchem das jeweilige Fahrzeug autonom mittels einer Steuereinrichtung des Fahrzeugs längs- und quergeführt wird, wobei von der Vielzahl der Fahrzeuge an den zentralen Informationspool Daten übertragen werden, welche Informationen über das Einschalten des automatischen Fahrmodus sowie einen Einschaltort des Fahrmodus und/oder Informationen über das Ausschalten des automatischen Fahrmodus sowie einen Ausschaltort des Fahrmodus bei den jeweiligen Fahrzeug beinhaltet.

Die DE 10 2013 210 923 A1 zeigt ein Verfahren zum Steuern eines Kraftfahrzeugs. Dieses Verfahren umfasst die Schritte des Bestimmens einer Fahrstrategie in Abhängigkeit einer Umgebung, des Erfassens einer Fahrstrategie eines vorausfahrenden Kraftfahrzeugs, des Bestimmens, dass die Fahrstrategien voneinander abweichen, und des Leitens des Kraftfahrzeugs nach der Fahrstrategie des vorausfahrenden Kraftfahrzeugs.

Die Aufgabe der Erfindung ist es daher eine Vorrichtung und ein Verfahren dahingehend zu verbessern, dass die Sicherheit beim Ausweichen vor Hindernissen erhöht wird.

Gelöst wird die Aufgabe durch ein Verfahren und eine Vorrichtung gemäß der unabhängigen Patentansprüche. Weitere vorteilhafte Ausgestaltungen sind Gegenstand der abhängigen Patentansprüche.

Erfindungsgemäß weist das Verfahren zur Steuerung eines Egofahrzeugs folgende Schritte auf: ein Bestimmen einer Egofahrstrategie in Abhängigkeit einer Umgebung; einem Erfassen einer Fahrstrategie eines vorausfahrenden Fahrzeugs; einem Vergleichen der Egofahrstrategie mit der Fahrstrategie des vorausfahrenden Fahrzeugs; einem Übernehmen der Fahrstrategie des vorausfahrenden Fahrzeugs bei einer Abweichung der Egofahrstrategie von der Fahrstrategie des vorausfahrenden Fahrzeugs; ein Durchführen der Gefährdungsbewertung der Fahrstrategie des vorausfahrenden Fahrzeugs; einem Modifizieren der übernommenen Fahrstrategie wenn das vorausfahrende Fahrzeug auf die Gegenfahrbahn ausweicht und die Gefährdungsbewertung unzuverlässig ist, wobei die Egofahrzeuggeschwindigkeit reduziert wird, die Gefährdungsbewertung der übernommenen und modifizierten Fahrstrategie erneut durchgeführt wird, und die Steuerung des Egofahrzeugs in Abhängigkeit der Gefährdungsbewertung nach der modifizierten Fahrstrategie oder einer Notfallstrategie erfolgt.

Bei der Fahrstrategie kann es sich um eine Folge oder Ausweichtrajektorie handeln. In vorteilhafter Weise kann das mögliche Kollisionsrisiko mit dem Gegenverkehr bei der Wahl / Festlegung der Ausweichtrajektorie mit berücksichtigt werden, insbesondere verbunden mit der Maßgabe, dass durch das Systemverhalten des Egofahrzeugs für den nachfolgenden Verkehr dadurch kein erhöhtes / ansteigendes Unfallrisiko erzeugt wird. Insbesondere kann durch das Befolgen einer Notfallstrategie, wie beispielsweise eine Vollbremsung die Gefahr für das Fahrzeug reduzieren werden, wenn keine ausreichende Gefährdungsbewertung durchgeführt werden konnte.

Bevorzugt kann die Abweichung durch ein Hindernis verursacht werden. In vorteilhafter Weise wird so eine Kollision mit dem Hindernis und dem Gegenverkehr vermieden.

In einer weiteren bevorzugten Ausgestaltung der Erfindung kann die Gefährdungsbewertung durch die Abmessungen des vorausfahrenden Fahrzeugs beeinträchtigt sein. In vorteilhafter Weise werden die Ausmaße des vorausfahrenden Fahrzeugs berücksichtigt. Insbesondere kann so die Gefährdung durch das Folgen eines SUVs oder eines LKWs besser eingeschätzt werden.

Weiter bevorzugt kann das Modifizieren der Egofahrstrategie durch Lenk- oder Bremseingriff erfolgten. In vorteilhafter Weise wird so direkt in die Bewegung des Fahrzeugs eingegriffen und ein Unfall kann verhindert werden.

In einer weiteren Ausgestaltung der Erfindung kann das Erfassen einer Fahrstrategie eines vorausfahrenden Fahrzeugs ein Ausweichmanöver des vorausfahrenden Fahrzeugs umfassten. In vorteilhafter Weise wird durch das Verhalten des vorausfahrenden Fahrzeugs frühzeitig eine Gefahr, beispielsweise durch ein Hindernis, erkannt und es können dann vorsorglich Maßnahmen zur Erhöhung der aktiven oder passiven Sicherheit getroffen werden.

Bevorzugt kann die Egofahrstrategie und die Fahrstrategie des vorausfahrenden Fahrzeugs eine Spurführung umfassten. In vorteilhafter Weise kann dem vorausfahrenden Fahrzeug bei einem Spurwechsel gefolgt werden ohne einer Gefährdung durch den Gegenverkehr ausgesetzt zu sein.

Unter dem Begriff der Spurführung zum vorausfahrenden Kraftfahrzeug ist im Lichte der Erfindung zu verstehen, dass das Egofahrzeug dem vorausfahrenden Fahrzeug im wesentlichen übereinstimmend folgt, wobei es nicht auf eine exakte Übereinstimmung bzgl. der Fahrspur und der Geschwindigkeit ankommt, sondern vielmehr der Betrag des seitlichen Versatzes (Abweichung zur ursprünglichen Fahrtrajektorie - Querversatz in Längsrichtung des Fahrzeuges) - welcher infolge der Folge-Strategie entsteht - im Vordergrund steht.

Weiter bevorzugt kann das Egofahrzeug die Fahrspur in Abhängigkeit der Gefährdungsbewertung beibehalten. In vorteilhafter Weise verlässt das Fahrzeug die eigene Fahrspur nicht und setzt sich damit nicht der Kollisionsgefahr mit dem Gegenverkehr aus.

In einer weiteren vorteilhaften Ausführungsform der Erfindung kann, sofern kein Ergebnis aus der Gefährdungsbewertung vorliegt, im Egofahrzeug die anfangs identische Spurführung zum vorausfahrenden Kraftfahrzeug nur solange fortgesetzt, solange das Egofahrzeug die eigene Fahrspur nicht verlässt.

In vorteilhafter Weise wird die Fahrtrajektorie gegenüber dem vorausfahrenden Fahrzeug dann kurzfristig (bevor die eigene Fahrbahn verlassen wird) derart abgeändert, dass das Egofahrzeug die eigene Fahrspur nicht verlässt, bzw. die Gegenfahrbahn nicht in Anspruch nimmt.

In einer weiteren Ausgestaltung der Erfindung kann die Gefährdungsbewertung unzureichend sein, wenn die Gegenfahrbahn eingeschränkt einsehbar ist. In vorteilhafter Weise verlässt sich das Fahrzeug nicht auf die Gefährdungsbewertung, wenn die Gegenfahrbahn beispielsweise wegen einer Kurve oder einer Kuppe nicht einsehbar ist.

Bevorzugt kann die Gefährdungsbewertung die Relativgeschwindigkeit und/oder den Abstand zwischen dem Egofahrzeug und einem entgegenkommenden Fahrzeug auf der Gegenfahrbahn berücksichtigen. In vorteilhafter Weise schätzt die Gefährdungsbewertung damit den Überholweg ein und berücksichtigt die für den Überholvorgang zur Verfügung stehende Zeit.

Erfindungsgemäß weist die Vorrichtung zur Steuerung eines Egofahrzeugs ein Umfelderfassungssystem zum Erfassen von Informationen über die Umgebung eines Egoahrzeugs, eine Erkennungseinheit zum Erkennen einer Fahrstrategie eines vorausfahrenden Fahrzeugs, eine Steuereinheit zum Steuern des Egofahrzeugs, und eine Einheit zur Durchführung des oben beschriebenen Verfahrens auf.

In vorteilhafter Weise kann das Umfelderfassungssystem oder die Erkennungseinheit Informationen aus einer Sensorik oder eines Sensorsystems eines Assistenzsystems nutzen. In weiter vorteilhafter Weise kann die Steuereinheit den Fahrer übersteuern oder vom Fahrer übersteuert werden.

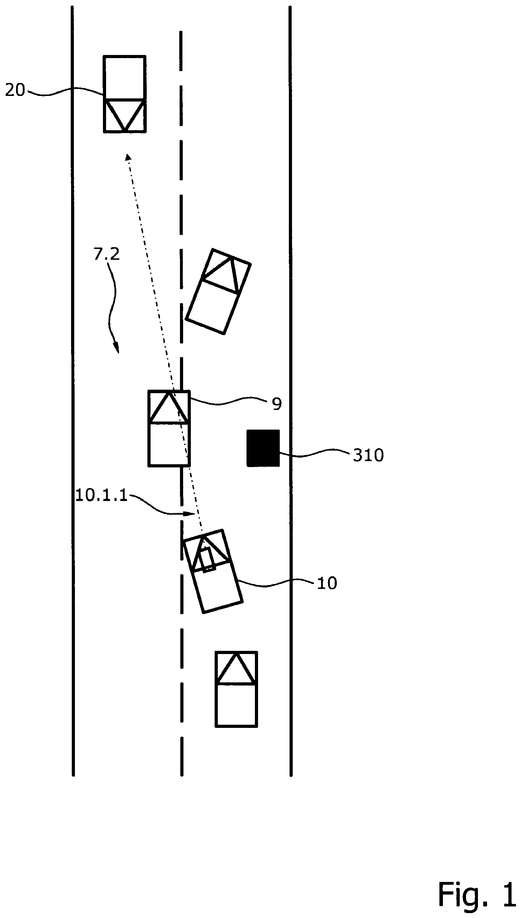

Weitere Vorteile, Merkmale und Anwendungsmöglichkeiten der vorliegenden Erfindung ergeben sich aus der nachfolgenden Beschreibung in Verbindung mit den in den Figuren 1 bis 4 dargestellten Ausführungsbeispielen. Dabei bilden alle beschriebenen und/oder bildlich dargestellten Merkmale für sich oder in beliebiger Kombination den Gegenstand bzw. das Verfahren der vorliegenden Erfindung, auch unabhängig von ihrer Zusammenfassung in den Ansprüchen oder deren Rückbezüge.

### Figurenbeschreibung

Die Erfindung wird nachstehend anhand eines Ausführungsbeispiels und unter Bezugnahme auf die Zeichnungen erläutert.

Fig. 1 bis Fig. 4 zeigen dabei schematisch als Prinzip-Darstellung ein Ablaufdiagramm zur Entscheidungsfindung, sowie zwei Verkehrs-Scenarios zur Visualisierung der Erfindung.
- Figur 1:: Eine schematische Prinzip-Darstellung eines Verkehrs-Scenarios.
- Figur 2:: Eine schematische Prinzip-Darstellung des weiteren Verlaufs des Verkehrs-Scenarios.
- Figur 3:: Eine schematische Prinzip-Darstellung eines Ablaufdiagramms zur Entscheidungsfindung.
- Figur 4:: Eine Vorrichtung zur Steuerung des Egofahrzeugs.

Die Figur 1 zeigt eine Verkehrssituation zum Ausweichen vor einem Hindernis 310. Das dem Egofahrzeug 10 vorausfahrende Fahrzeug 9 weicht einem Hindernis 310 aus und muss dafür seine Trajektorie in eine Ausweichtrajektorie ändern. Die Ausweichtrajektorie des vorausfahrenden Fahrzeugs 9 weicht somit von der bisherigen Folgetrajektorie des Egofahrzeugs 10 ab. Das Egofahrzeug übernimmt die Ausweichtrajektorie des vorausfahrenden Fahrzeugs 9 und führt eine Gefährdungsbewertung durch. Die Sicht 10.1.1 auf die Gegenfahrbahn 7.2 ist durch das vorausfahrende Fahrzeug 9 verdeckt, sodass die Gefährdungsbewertung unzureichend ist.

Die Übernahme der Ausweichtrajektorie vom vorausfahrenden Fahrzeug 9 ist nur gefahrlos möglich, solange kein Gegenverkehr 20 die Gegenfahrbahn 7.2 belegt, bzw. die Ausweichtrajektorie kein zumindest teilweises Befahren der Gegenfahrbahn 7.2 erforderlich macht.

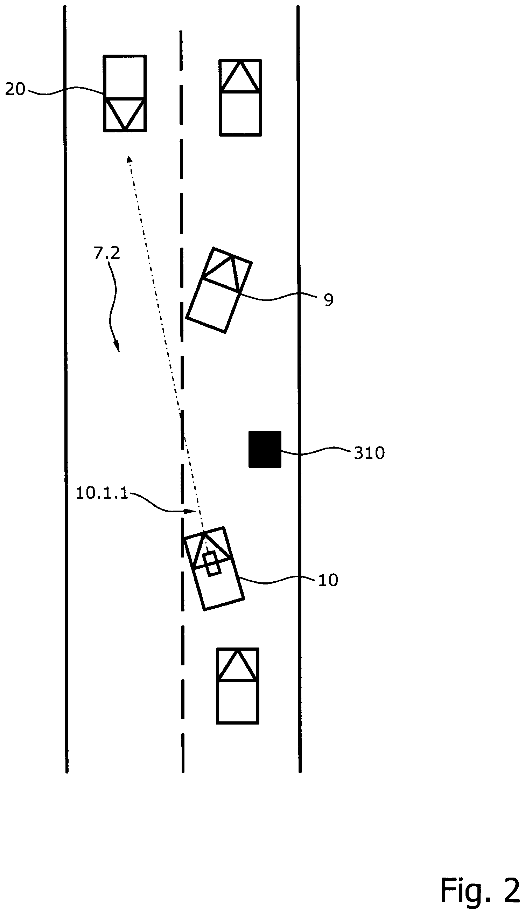

In Figur 2 ist der weitere Verlauf der in Figur 1 gezeigten Verkehrssituation gezeigt. Vor dem automatischem Folgen der Ausweichtrajektorie durch das Egofahrzeug 10, wird das Egofahrzeug 10 verzögert, sodass sich der Abstand zum vorausfahrenden Fahrzeug 9 vergrößert und somit vom Egofahrzeug 10 aus eine ausreichende Sicht 10.1.1 auf die Gegenfahrbahn 7.2 vorhanden ist. Die Gefährdungsbewertung kann dann zuverlässig die Verkehrssituation bewerten und beispielsweise ein entgegenkommendes Fahrzeug 20 erkennen.

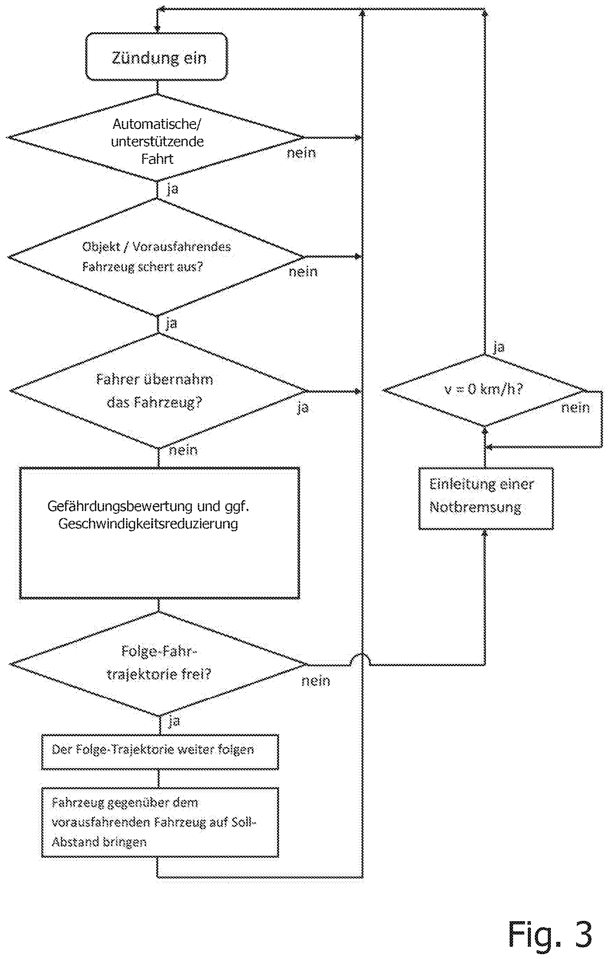

Die Figur 3 zeigt eine schematische Prinzip-Darstellung eines Ablaufdiagramms zur Entscheidungsfindung. Das Verfahren beginnt mit einer Überwachung des vor dem Egofahrzeug liegenden Fahrkorridors mittels eines Systems zur Umgebungsüberwachung nachdem das Egofahrzeug in Bewegung gesetzt oder gestartet wurde (Zündung EIN).

Im nächsten Schritt, der lediglich fakultativ ist, wird geprüft, ob das Egofahrzeug automatisch oder mit Unterstützung betrieben ist

Im nächsten Schritt wird mit Hilfe des Umgebungsüberwachungssystem die Trajektorie des vorausfahrenden Fahrzeugs überwacht und eine Änderung dieser Trajektorie, beispielsweise in eine Ausweichtrajektorie, erkannt.

Im nächsten fakultativen Schritt wird geprüft, ob die Steuerung das Egofahrzeug durch den Fahrzeugführer übernommen wurde. Hier ist es möglich eine Übersteuerung durch den Fahrer einzubauen. Jedoch ist es auch möglich die Übersteuerung durch den Fahrer zu ignorieren, wenn sich dadurch ein Unfall verhindern lässt.

Bei einer unzuverlässigen Gefährdungsbewertung wird die Geschwindigkeit des Egofahrzeugs durch das Assistenzsystem reduziert, damit sich der Abstand zum vorausfahrenden Fahrzeug vergrößert und somit das Umgebungserfassungssystem die Gegenfahrbahn uneingeschränkt einsehen kann.

Im nächsten Schritt wird geprüft, ob die Gefährdungsbewertung für das Befahren der Gegenfahrbahn ausreicht, da die Folgetrajektorie beispielsweise zumindest ein teilweises Befahren der Gegenfahrbahn erforderlich macht.

Ist die Gefährdungsbewertung für die Folgetrajektorie (also das Befahren der Gegenfahrbahn) ausreichend und ungefährlich für das Egofahrzeugt, so folgt das Egofahrzeug dem vorausfahrenden Fahrzeug und stellt den Sollabstand zum vorausfahrenden Fahrzeug wieder her.

Ist die Folgetrajektorie hingegen nicht gefahrlos für das Egofahrzeug umsetzbar, so wird eine Notstrategie, beispielsweise eine Notbremsung eingeleitet oder nach einer anderen Ausweichtrajektorie gesucht bis das Egofahrzeug zum Stillstand gebracht wird, bzw. am Hindernis vorbeigeführt wurde.

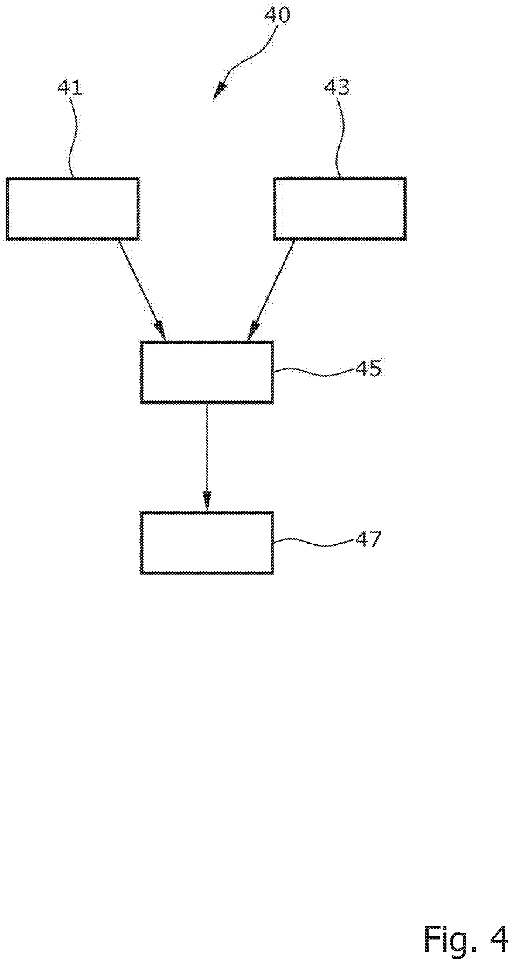

Figur 4 zeigt eine Vorrichtung 40 zur Steuerung eines Egofahrzeugs. Ein Umfelderfassungssystem 41 erfasst Informationen über die Umgebung des Egoahrzeugs, eine Erkennungseinheit 43 erkennt einer Fahrstrategie eines vorausfahrenden Fahrzeugs. Eine Einheit 45 nutzt die Informationen des Umfelderfassungssystems 41 und der Erkennungseinheit 43 zur Durchführung des in den obigen Figuren beschriebenen Verfahrens, wobei das Egofahrzeug durch eine Steuereinheit 47, die die Informationen der Einheit 45 nutzt, gesteuert wird.

## Patentansprüche

1. Verfahren zur Steuerung eines Egofahrzeugs mit den Schritten:
- einem Bestimmen einer Egofahrstrategie in Abhängigkeit einer Umgebung;
- einem Erfassen einer Fahrstrategie eines vorausfahrenden Fahrzeugs;
- einem Vergleichen der Egofahrstrategie mit der Fahrstrategie des vorausfahrenden Fahrzeugs;
- einem Übernehmen der Fahrstrategie des vorausfahrenden Fahrzeugs bei einer Abweichung der Egofahrstrategie von der Fahrstrategie des vorausfahrenden Fahrzeugs;
- ein Durchführen der Gefährdungsbewertung der Fahrstrategie des vorausfahrenden Fahrzeugs;
**dadurch gekennzeichnet, dass**
- die übernommene Fahrstrategie modifiziert wird, wenn das vorausfahrende Fahrzeug auf die Gegenfahrbahn ausweicht und die Gefährdungsbewertung unzuverlässig ist,
- die Egofahrzeuggeschwindigkeit reduziert wird,
- die Gefährdungsbewertung der übernommenen und modifizierten Fahrstrategie erneut durchgeführt wird, und
- die Steuerung des Egofahrzeugs in Abhängigkeit der Gefährdungsbewertung nach der modifizierten Fahrstrategie oder einer Notfallstrategie erfolgt.

2. Verfahren gemäß Anspruch 1, wobei die Abweichung durch ein Hindernis verursacht wird.

3. Verfahren gemäß einem der vorhergehenden Ansprüche, wobei die Gefährdungsbewertung durch die Abmessungen des vorausfahrenden Fahrzeugs beeinträchtigt wird.

4. Verfahren gemäß einem der vorhergehenden Ansprüche, wobei das Modifizieren der Egofahrstrategie durch Lenk- oder Bremseingriff erfolgt.

5. Verfahren gemäß einem der vorhergehenden Ansprüche, wobei das Erfassen einer Fahrstrategie eines vorausfahrenden Fahrzeugs ein Ausweichmanöver des vorausfahrenden Fahrzeugs umfasst.

6. Verfahren gemäß einem der vorhergehenden Ansprüche, wobei die Egofahrstrategie und die Fahrstrategie des vorausfahrenden Fahrzeugs eine Spurführung umfasst.

7. Verfahren gemäß einem der vorhergehenden Ansprüche, wobei das Egofahrzeug die Fahrspur in Abhängigkeit der Gefährdungsbewertung beibehält.

8. Verfahren gemäß einem der vorhergehenden Ansprüche, wobei die Gefährdungsbewertung unzureichend ist, wenn die Gegenfahrbahn eingeschränkt einsehbar ist.

9. Verfahren gemäß einem der vorhergehenden Ansprüche, wobei die Gefährdungsbewertung die Relativgeschwindigkeit und/oder den Abstand zwischen Egofahrzeug und einem entgegenkommenden Fahrzeug auf der Gegenfahrbahn berücksichtigt.

10. Vorrichtung zur Steuerung eines Egofahrzeugs, umfassend
- eine Umfelderfassungssystem zum Erfassen von Informationen über die Umgebung eines Egoahrzeugs;
- eine Erkennungseinheit zum Erkennen einer Fahrstrategie eines vorausfahrenden Fahrzeugs;
- eine Steuereinheit zum Steuern des Egofahrzeugs; und
- eine Einheit zur Durchführung des Verfahrens gemäß einem der vorherigen Ansprüche.

## Claims

1. A method for controlling an ego vehicle, having the steps of:
- determining an ego driving strategy as a function of the surroundings;
- detecting a driving strategy of a vehicle in front;
- comparing the ego driving strategy with the driving strategy of the vehicle in front;
- adopting the driving strategy of the vehicle in front if the ego driving strategy differs from the driving strategy of the vehicle in front;
- performing a hazard evaluation of the driving strategy of the vehicle in front;
**characterized in that**
- the adopted driving strategy is modified if the vehicle in front swerves onto the opposite carriageway and the hazard evaluation is unreliable,
- the speed of the ego vehicle is reduced,
- the hazard evaluation of the adopted and modified driving strategy is performed again, and
- the ego vehicle is controlled as a function of the hazard evaluation according to the modified driving strategy or an emergency strategy.

2. The method according to Claim 1, wherein the swerving maneuver is caused by an obstacle.

3. The method according to any one of the preceding claims, wherein the hazard evaluation is adversely affected by the dimensions of the vehicle in front.

4. The method according to any one of the preceding claims, wherein the ego driving strategy is modified by steering or braking intervention.

5. The method according to any one of the preceding claims, wherein the detection of a driving strategy of a vehicle in front comprises a swerving maneuver of the vehicle in front.

6. The method according to any one of the preceding claims, wherein the ego driving strategy and the driving strategy of the vehicle in front comprises lane guidance.

7. The method according to any one of the preceding claims, wherein the ego vehicle stays in lane as a function of the hazard evaluation.

8. The method according to any one of the preceding claims, wherein the hazard evaluation is inadequate if the view of the opposite carriageway is restricted.

9. The method according to any one of the preceding claims, wherein the hazard evaluation takes into account the relative speed and/or the distance between the ego vehicle and an oncoming vehicle on the opposite carriageway.

10. A device for controlling an ego vehicle, comprising
- an environment detection system for acquiring information about the surroundings of an ego vehicle;
- a recognition unit for recognizing a driving strategy of a vehicle in front;
- a control unit for controlling the ego vehicle; and
- a unit for carrying out the method according to any one of the preceding claims.

## Revendications

1. Procédé pour le pilotage d'un véhicule égo, avec les étapes :
- une détermination d'une stratégie de conduite égo en fonction d'un environnement ;
- un enregistrement d'une stratégie de conduite d'un véhicule précédent ;
- une comparaison de la stratégie de conduite égo avec la stratégie de conduite du véhicule précédent ;
- une reprise de la stratégie de conduite du véhicule précédent en cas d'écart entre la stratégie de conduite égo et la stratégie de conduite du véhicule précédent ;
- une exécution de l'évaluation des risques de la stratégie de conduite du véhicule précédent ;
**caractérisé en ce que**
- la stratégie de conduite reprise est modifiée lorsque le véhicule précédent passe sur la chaussée opposée et que l'évaluation des risques n'est pas fiable,
- la vitesse du véhicule égo est réduite,
- l'évaluation des risques de la stratégie de conduite reprise et modifiée est exécutée de nouveau, et
- le pilotage du véhicule égo est effectué en fonction de l'évaluation des risques d'après la stratégie de conduite modifiée ou une stratégie d'urgence.

2. Procédé selon la revendication 1, l'écart étant provoqué par un obstacle.

3. Procédé selon l'une des revendications précédentes, l'évaluation des risques étant entravée par les dimensions du véhicule précédent.

4. Procédé selon l'une des revendications précédentes, la modification de la stratégie de conduite égo étant exécutée par intervention de braquage ou de freinage.

5. Procédé selon l'une des revendications précédentes, l'enregistrement d'une stratégie de conduite d'un véhicule précédent comprenant une manoeuvre d'évitement du véhicule précédent.

6. Procédé selon l'une des revendications précédentes, la stratégie de conduite égo et la stratégie de conduite du véhicule précédent comprenant un guidage de voie.

7. Procédé selon l'une des revendications précédentes, le véhicule égo restant dans la voie de circulation en fonction de l'évaluation des risques.

8. Procédé selon l'une des revendications précédentes, l'évaluation des risques n'étant pas suffisante lorsque la chaussée opposée n'est visible que de façon limitée.

9. Procédé selon l'une des revendications précédentes, l'évaluation des risques prenant en compte la vitesse relative et/ou la distance entre le véhicule égo et un véhicule venant en sens inverse sur la chaussée opposée.

10. Dispositif pour le pilotage d'un véhicule égo, comprenant
- un système d'enregistrement d'environnement pour l'enregistrement d'informations sur l'environnement d'un véhicule égo ;
- une unité de détection pour la détection d'une stratégie de conduite d'un véhicule précédent ;
- une unité de pilotage pour le pilotage du véhicule égo ; et
- une unité pour l'exécution du procédé selon l'une des revendications précédentes.
